# EUROPEAN PATENT APPLICATION

(11) **EP 3 720 211 A1**
(43) Date of publication of application: **07.10.2020**
(21) Application number: 18881795.1
(22) Date of filing: 26.11.2018
(51) Int. Cl.: H04W 72/04, H04W 28/04, H04W 72/14

(54) **USER TERMINAL AND WIRELESS COMMUNICATION METHOD**

(30) Priority: 27.11.2017 JP 2017239054
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/043394
(87) International publication number: WO 2019/103142

(57) **Abstract**

To suppress reduction in a communication throughput and the like even in a case of piggybacking uplink control information on an uplink data channel. A user terminal according to one aspect of the present disclosure includes a transmitting section that transmits data and uplink control information on an uplink shared channel, and a control section that determines a transmission process to be applied to the data, based on whether or not transmission of the data is based on a transmission indication from a radio base station.

## Description

### Technical Field

The present disclosure relates to a user terminal and a radio communication method in next-generation mobile communication systems.

### Background Art

In UMTS (Universal Mobile Telecommunications System) networks, the specifications of Long Term Evolution (LTE) have been drafted for the purpose of further increasing high speed data rates, providing lower latency, and so on (see Non-Patent Literature 1). For the purpose of further high capacity, advancement, and the like of LTE (LTE Rel. 8, Rel. 9), the specifications of LTE-A (LTE-Advanced, LTE Rel. 10, Rel. 11, Rel. 12, Rel. 13) have been drafted.

Successor systems of LTE (also referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In existing LTE systems (for example, LTE Rel. 8 to Rel. 13), a user terminal (UE (User Equipment)) transmits uplink control information (UCI) by use of a UL data channel (for example, PUSCH (Physical Uplink Shared Channel)) and/or a UL control channel (for example, PUCCH (Physical Uplink Control Channel)).

In a case that an uplink data transmission timing and an uplink control information (UCI) transmission timing overlap, the UE may use an uplink shared channel (PUSCH) to transmit uplink data and UCI. Such transmission of UCI by use of a PUSCH is also referred to as "UCI on PUSCH" ("piggyback on PUSCH"), "UCI piggyback," "PUSCH piggyback," and the like.

The UCI may include, for example, retransmission control information for DL data (also referred to as a "HARQ-ACK," "ACK/NACK," "A/N," and the like), a scheduling request (SR), CSI (for example, periodic CSI (P-CSI), aperiodic CSI (A-CSI), and the like) .

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For NR, similarly to the existing LTE systems, a study is underway to use a PUSCH to transmit uplink data and UCI. For NR, in order to attain low latency communication, a study is underway, besides UL grant-based transmission for transmitting UL data based on a UL grant, to adopt UL grant-free transmission for transmitting UL data without any UL grant.

However, for NR, how to piggyback UCI on a PUSCH for UL grant-based transmission and UL grant-free transmission is not studied yet. Unless an appropriate transmission process is determined, a communication throughput, a communication quality, and the like may deteriorate.

In view of this, an object of the present disclosure is to provide a user terminal and a radio communication method, in which reduction in communication throughput and the like can be suppressed even in a case of piggybacking uplink control information on an uplink data channel.

### Solution to Problem

A user terminal according to one aspect of the present disclosure includes a transmitting section that transmits data and uplink control information on an uplink shared channel, and a control section that determines a transmission process to be applied to the data, based on whether or not transmission of the data is based on a transmission indication from a radio base station.

### Advantageous Effects of Invention

According to one aspect of the present disclosure, reduction in a communication throughput and the like can be suppressed even in a case of piggybacking uplink control information on an uplink data channel.

### Brief Description of Drawings

FIGS. 1A and 1B are diagrams to show examples of control on a piggybacked HARQ-ACK in a case of PUSCH transmission in accordance with a UL grant in an embodiment;
FIGS. 2A and 2B are diagrams to show examples of control on a piggybacked HARQ-ACK in a case of PUSCH transmission without UL grant in an embodiment;
FIG. 3 is a diagram to show an example of a schematic structure of a radio communication system according to an embodiment;
FIG. 4 is a diagram to show an example of an overall structure of a radio base station according to an embodiment;
FIG. 5 is a diagram to show an example of a functional structure of the radio base station according to an embodiment;
FIG. 6 is a diagram to show an example of an overall structure of a user terminal according to an embodiment;
FIG. 7 is a diagram to show an example of a functional structure of the user terminal according to an embodiment; and
FIG. 8 is a diagram to show an example of a hardware structure of the radio base station and the user terminal according to an embodiment.

### Description of Embodiments

An example of a method of achieving a low PAPR (Peak-to-Average Power Patio) and/or low inter-modulation distribution (IMD) in UL communication is a method of multiplexing UCI and UL data on a PUSCH to be transmitted (piggybacking UCI and data) in a case that UCI transmission and UL data (UL-SCH) transmission occur at the same timing.

In the existing LTE systems, in a case that a PUSCH is used to transmit UL data and UCI (for example, an A/N), a puncture process is performed on the UL data to multiplex the UCI on the puncture-processed resource. This is because a volume (or a ratio) of the UCI multiplexed on the PUSCH is not so large in the existing LTE systems, and/or is for suppressing complexity of a reception process in a base station even in a case that a DL signal detection error occurs in the UE.

The puncture process on the data is to perform coding by assuming that the resource allocated for the data can be utilized (or without consideration of an amount of an unavailable resource), but not to map a coded symbol to an actually unavailable resource (for example, a resource for the UCI) (that is, to make a room in the resource). On a receiving side, performance deterioration due to the puncturing can be suppressed by not using the coded symbol in the punctured resource in decoding.

For NR, a study is underway also to apply a rate-matching process to UL data in a case that a PUSCH is used to transmit the UL data and UCI.

The rate-matching process being performed on the data is to control the number of bits after coding (coded bits) in consideration of actually available radio resources. In a case that the number of coded bits is smaller than the number of bits mappable to the actually available radio resources, at least some of the coded bits may be repeated. In a case that the number of coded bits is larger than the number of mappable bits, some of coded bits may be deleted.

The rate-matching process on the UL data in consideration of an actually available radio resource allows coding at a higher coding rate than that in a case of the puncture process (with a high performance). Therefore, for example, adopting the rate-matching process in place of the puncture process in a case of a large payload size of the UCI allows UL signals to be generated with a higher quality, improving a communication quality.

In NR, in order to attain low latency communication, a study is underway, besides UL grant-based transmission for transmitting UL data based on a UL grant, to adopt UL grant-free transmission for transmitting UL data without UL grant.

The "UL grant transmission" may be referred to as a "UL transmission with UL grant" or "PUSCH with UL grant." The "UL grant-free transmission" may be referred to as "UL transmission without UL grant," or may be defined as one type of UL semi-persistent scheduling (SPS).

In the UL grant-based transmission, the radio base station (which may also be referred to as, for example, a "BS (Base Station)," "transmission/reception point (TRP)," "eNB (eNodeB)," "gNB (NR NodeB)," and the like) transmits a downlink control channel (UL grant) indicating allocation of the UL data (PUSCH (Physical Uplink Shared Channel) to the UE, and the UE transmits the UL data in accordance with the UL grant.

On the other hand, in the UL grant-free transmission, the UE transmits the UL data without receiving a UL grant for scheduling the data. Note that the UL grant-free transmission means no direct UL grant via a PDCCH for the UL data transmission, and for example, RRC signaling for configuring the UL grant-free transmission, or physical layer signaling for activating the UL grant-free transmission (for example, downlink control information (DCI)) can also be adopted. Hereinafter, the "UL grant-free" is also referred to as merely "ULGF," "PUSCH without UL grant," "GF PUSCH," "GF," and the like.

Similarly to the SPS in the existing LTE, the UE can determine whether to perform transmission by use of a resource for GF transmission (which may also be referred to as a "GF resource") based on a given activation/deactivation signal. Even in a case that the GF transmission is activated, if no data is in a transmission buffer, the UE may skip the GF transmission.

The UE may transmit an acknowledgement (ACK) in response to reception of a given activation/deactivation signal. The ACK may be transmitted by use of a MAC CE, for example.

Some types of control of the GF transmission (type 1, type 2, and so on) are under study. For example, for type 1, parameters used for the GF transmission (which may also be referred to as "GF transmission parameters," "GF parameters," and the like) are configured for the UE through higher layer signaling only. The GF parameters may include information specifying the GF resource, for example.

Here, for example, the higher layer signaling may be any one or a combination of RRC (Radio Resource Control) signaling, MAC (Medium Access Control) signaling, broadcast information, and the like.

For MAC signaling, the MAC control elements (MAC CEs), MAC PDUs (protocol data units), and the like may be used, for example. For example, the broadcast information may be master information blocks (MIBs), system information blocks (SIBs), minimum system information (RMSI (Remaining Minimum System Information)), and the like.

For type 2, some of the GF parameters (for example, a waveform, a period, and the like) are configured for the UE through higher layer signaling. In a case of type 2, other parameters may be specified by an activation signal, for example. The activation signal may be a PDCCH with cyclic redundancy check (CRC) bits being masked (scrambled) by a radio network temporary identifier (RNTI (Cell-Radio Network Temporary Identifier)) for the activation signal configured through RRC signaling, for example.

Also in NR, the UCI on PUSCH may be employed similarly to the existing LTE systems. However, for NR in which the number of bits of UCI is assumed to be larger than that of the existing LTE, how to piggyback UCI on a PUSCH for UL grant-based transmission and UL grant-free transmission is not studied yet. Unless an appropriate transmission process is determined, a communication throughput, a communication quality and the like may deteriorate.

In view of this, the inventors of the present invention came up with the idea of controlling, in a case that a PUSCH is used to transmit UCI, piggybacking the UCI on the PUSCH, based on the number of bits of the UCI, whether or not the PUSCH is UL grant-based, and the like. For example, the UE according to one aspect of the present disclosure determines, in a case that a PUSCH is used to transmit UCI and data, a transmission process (puncturing, rate-matching, and the like) to be applied to the data, based on whether or not the data transmission is based on a transmission indication (UL grant) from the radio base station.

Hereinafter, embodiments according to the present disclosure will be described in detail. Note that the UCI may include at least one of a scheduling request (SR), acknowledgement information for a DL data channel (for example, PDSCH (Physical Downlink Shared Channel)) (also referred to as a "HARQ-ACK (Hybrid Automatic Repeat reQuest-Acknowledge)," "ACK" or "NACK (Negative ACK)," or "A/N," and the like), channel state information (CSI), beam index information (BI (Beam Index)), and a buffer status report (BSR).

In the following embodiments, the "HARQ-ACK" may be interpreted as "UCI," or another type of UCI such as "SR" or "CSI." "2 bits" may be interpreted as a "given number of bits."

Note that the "data," "data channel (for example, PUSCH)," "resource for data channel," and the like herein may be interchangeably interpreted.

### (Radio Communication Method)

### <PUSCH with UL grant>

In an embodiment, in the case of the PUSCH transmission in accordance with a UL grant, the UE may determine which of rate-matching and puncturing is to be applied to data of PUSCH transmission, based on the number of bits of the piggybacked HARQ-ACK.

For example, the UE, in a case of piggybacking a HARQ-ACK of up to 2 bits on the PUSCH based on the UL grant, may puncture UL data on the PUSCH by way of the HARQ-ACK.

The UE, in a case of piggybacking a HARQ-ACK of more than 2 bits on a PUSCH based on the UL grant, may rate-match UL data on the PUSCH by way of the HARQ-ACK.

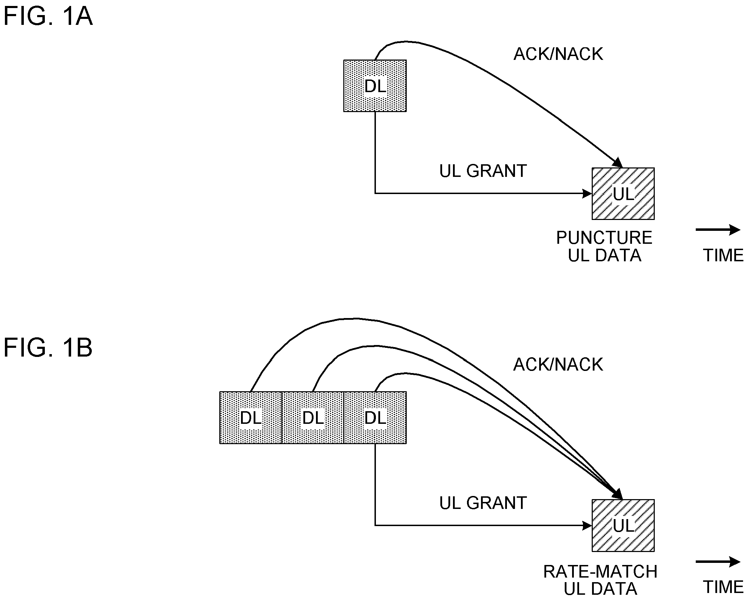

FIGS. 1A and 1B are diagrams to show examples of control on a piggybacked HARQ-ACK in the case of performing PUSCH transmission in accordance with a UL grant in an embodiment. In this example, portions designated by "DL" and "UL" represent given resources (for example, time/frequency resources), and a period of each portion corresponds to any time unit (for example, one or a plurality of slots, mini-slots, symbols, subframes, and the like). This also applies to the following examples.

In a case of FIG. 1A, the UE transmits an ACK/NACK (assumed to be up to 2 bits, here) corresponding to one DL resource shown in the figure by use of a UL resource indicated by a given UL grant. The UE may puncture a part of the UL resource to communicate the ACK/NACK.

In a case of FIG. 1B, the UE transmits ACKs/NACKs (assumed to be more than 2 bits, here) corresponding to three DL resources shown in the figure by use of a UL resource indicated by a given UL grant. The UE may rate-match a part of the UL resource to communicate the ACKs/NACKs.

Note that the UL resource that is rate-matched may be limited to a specific resource, and the resource may be referred to as a "rate-matched resource," a "resource for rate-matching," and the like. The UL resource that is punctured may be limited to a specific resource, and the resource may be referred to as a "punctured resource," a "resource for puncturing," and the like. These resources may similarly be used in the following embodiments.

### <PUSCH without UL grant>

In an embodiment, in the case of PUSCH transmission without UL grant, the UE may determine which of rate-matching and puncturing is applied to the data of the PUSCH transmission, based on the number of bits of a piggybacked HARQ-ACK.

For example, the UE, in a case of piggybacking a HARQ-ACK of up to 2 bits on a PUSCH without UL grant, may puncture UL data on the PUSCH by way of the HARQ-ACK.

The UE may assume that the HARQ-ACK of up to 2 bits is not piggybacked on the PUSCH without UL grant. In this case, since the PUSCH without UL grant can be assumed to be always rate-matched in a case that there is a HARQ-ACK, the base station does not need to perform blind decoding assuming puncturing, and thus, a load of the process can be reduced.

Note that the base station preferably perform scheduling such that no HARQ-ACK of up to 2 bits is to be transmitted in a resource where a PUSCH without UL grant can be transmitted. In a case that there is a HARQ-ACK of up to 2 bits at the same timing as a PUSCH without UL grant, the UE may drop the HARQ-ACK.

The UE, in a case of piggybacking a HARQ-ACK of more than 2 bits on the PUSCH without UL grant, may rate-match UL data on the PUSCH by way of the HARQ-ACK.

The UE may assume that the HARQ-ACK of more than 2 bits is not piggybacked on the PUSCH without UL grant. In this case, since the PUSCH without UL grant can be assumed to be always punctured in a case that there is a HARQ-ACK, the base station does not need to perform blind decoding assuming rate-matching, and thus, a load of the process can be reduced.

Note that the base station preferably performs scheduling such that no HARQ-ACK of more than 2 bits is to be transmitted in a resource where a PUSCH without UL grant can be transmitted. In a case that there is a HARQ-ACK of more than 2 bits at the same timing as a PUSCH without UL grant, the UE may drop the HARQ-ACK.

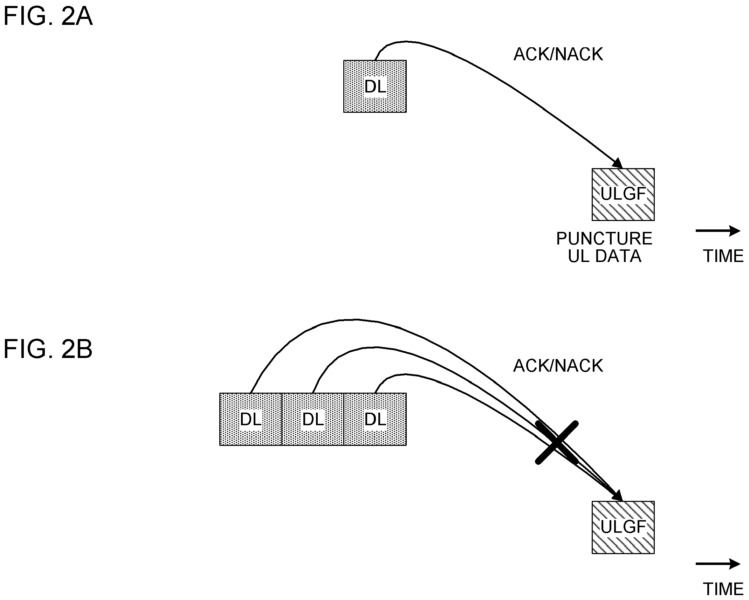

FIGS. 2A and 2B are diagrams to show examples of control on the piggybacked HARQ-ACK in the case of the PUSCH transmission without UL grant in an embodiment.

In a case of FIG. 2A, the UE transmits an ACK/NACK (assumed to be up to 2 bits, here) corresponding to one DL resource shown in the figure by use of a given ULGF resource. The UE may puncture a part of the ULGF resource to communicate the ACK/NACK.

In a case of FIG. 2B, the UE assumes not to transmit ACKs/NACKs (assumed to be more than 2 bits, here) corresponding to three DL resources shown in the figure by use of a ULGF resource. The UE may use a resource different from the ULGF resource (for example, a PUCCH resource) to communicate the ACK/NACK.

In an embodiment, the UE may control, in the case of the PUSCH transmission without UL grant, bundling of the HARQ-ACK based on the number of transport blocks (TBs), code blocks (CBs), or code block groups (CBGs) corresponding to the piggybacked HARQ-ACK.

Here, the CB is a unit obtained by dividing a TB. In a case that a TB size (TBS (Transport Block Size)) exceeds a given threshold (for example, 6144 bits), the UE may divide a TB into one or more CBs to perform coding in units of CB. The CBG is a group containing one or more CBs.

For example, the UE may apply HARQ-ACK bundling, in a case of performing PUSCH transmission without UL grant and the number of given blocks for downlink data corresponding to a HARQ-ACK to be piggybacked on the PUSCH (for example, TB, CB, or CBG) exceeds a given threshold (for example, 2), such that the total number of bits of the HARQ-ACK to be piggybacked on the PUSCH would be up to 2 bits (for example, 1 or 2 bits). Here, a plurality of HARQ-ACKs being applied with bundling (which may be represented as "bundled") may mean that logical AND is applied to the plurality of HARQ-ACKs.

The HARQ-ACK bundling may include at least one of following (1) to (3) :
(1) in a case of CBG-based transmission and/or retransmission, a HARQ-ACK for a CBG corresponding to a TB may be bundled,
(2) for more than one TB in a spatial domain for a given scheduled PDSCH (for example, more than one TB multiplexed in the spatial domain for the PDSCH), HARQ-ACKs corresponding to these TBs in the spatial domain may be bundled, and
(3) for more than one TB in a time domain (for example, more than one TB multiplexed in a time spatial domain for the PDSCH), HARQ-ACKs corresponding to these TBs in the spatial domain may be bundled.

In a case that the bundling of a plurality of HARQ-ACKs is adopted, a priority order (application order) may be defined for these HARQ-ACKs.

For example, the UE may first apply the bundling described in (1) above to a HARQ-ACK to be piggybacked. In a case that the HARQ-ACK still has more than 2 bits even after applying the bundling described in (1) above, the bundling described in (2) above may be further adopted. In a case that the HARQ-ACK still has more than 2 bits even after applying the bundling described in (2) above, the bundling described in (3) above may be further adopted.

The UE may first apply the bundling described in (2) above to a HARQ-ACK to be piggybacked. In a case that the HARQ-ACK still has more than 2 bits even after applying the bundling described in (2) above, the bundling described in (1) above may be further adopted. In a case that the HARQ-ACK still has more than 2 bits even after applying the bundling described in (1) above, the bundling described in (3) above may be further adopted.

Information about the given threshold described above, information about the priority order described above, and the like may be reported to the UE through higher layer signaling or the like.

According to such a structure, even in the case of performing PUSCH transmission without UL grant where it is assumed that there are not so many resources, the HARQ-ACK to be piggybacked on the PUSCH can be appropriately bundled and transmitted.

According to the embodiment described above, the UCI transmission can be appropriately controlled for UCI on PUSCH.

### (Radio Communication System)

Hereinafter, a structure of a radio communication system according to an embodiment will be described. In this radio communication system, at least one combination of the above plurality of aspects is used to perform communication.

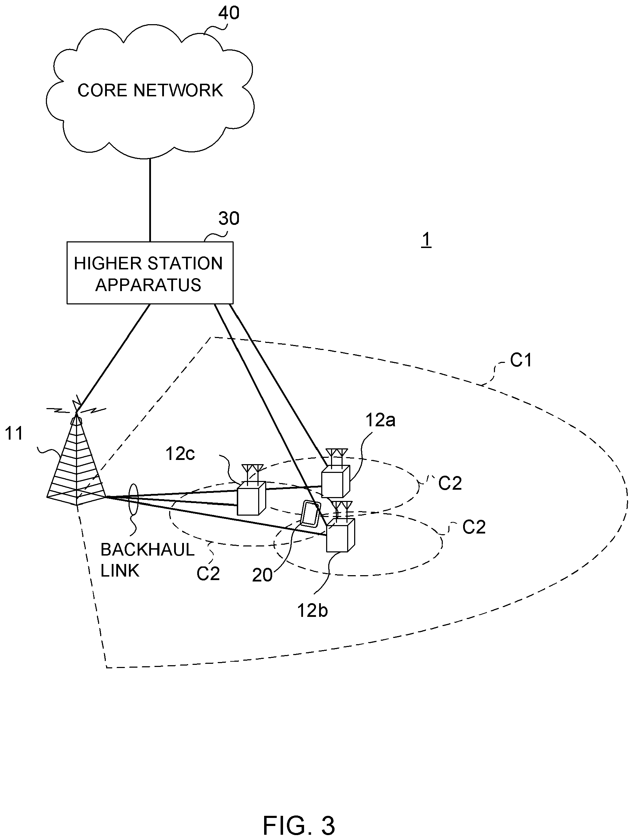

FIG. 3 is a diagram to show an example of a schematic structure of the radio communication system according to an embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. Also, the user terminal 20 may adopt the CA or the DC by using a plurality of cells (CCs) (for example, five or less CCs, six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

The term "numerology" may refer to communication parameters applied to transmission and/or reception of a given signal and/or channel, and for example, may indicate at least one of a subcarrier spacing, a bandwidth, a symbol length, a cyclic prefix length, a subframe length, a TTI length, the number of symbols per TTI, a radio frame structure, a particular filter processing performed by a transceiver in a frequency domain, a particular windowing processing performed by a transceiver in a time domain, and so on. For example, if given physical channels use different subcarrier spacings of the OFDM symbols constituted and/or different numbers of the OFDM symbols, it may be referred to as that the numerologies are different.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include at least one of the downlink control channels (PDCCH (Physical Downlink Control Channel) and/or EPDCCH (Enhanced Physical Downlink Control Channel), a PCFICH (Physical Control Format Indicator Channel), and a PHICH (Physical Hybrid-ARQ Indicator Channel). Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. Downlink radio link quality information (CQI (Channel Quality Indicator)), acknowledgement information, a scheduling request (SR), and so on are communicated on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

In the radio communication system 1, the synchronization signal (for example, PSS (Primary Synchronization Signal)/SSS (Secondary Synchronization Signal)), a broadcast channel (PBCH (Physical Broadcast Channel)) and the like are communicated. Note that the synchronization signal and the PBCH may be transmitted in a synchronization signal block (SSB).

### <Radio Base Station>

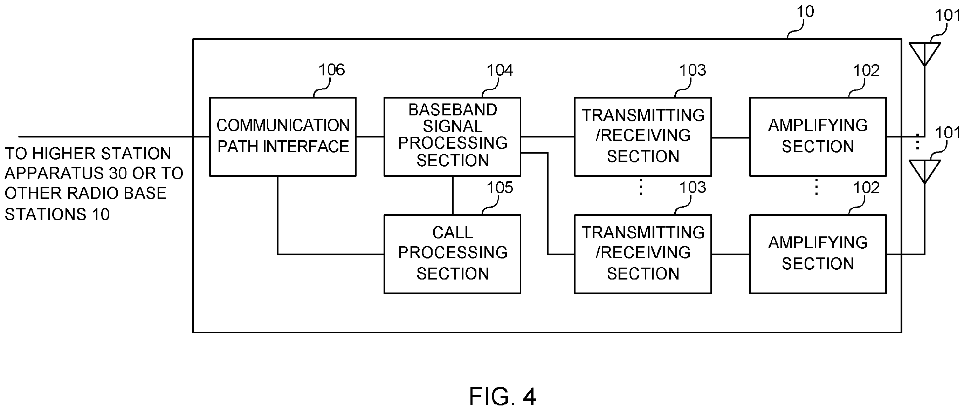

FIG. 4 is a diagram to show an example of an overall structure of the radio base station according to an embodiment. A radio base station 10 includes a plurality of transmitting/receiving antennas 101, amplifying sections 102, transmitting/receiving sections 103, a baseband signal processing section 104, a call processing section 105 and a communication path interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can include transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may include a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into baseband signals through frequency conversion, and output the baseband signals to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the radio base station 10, manages the radio resources and so on.

The communication path interface 106 transmits and/or receives signals to and/or from the higher station apparatus 30 via a given interface. The communication path interface 106 may transmit and/or receive signals (backhaul signaling) with other radio base stations 10 via an inter-base station interface (for example, an optical fiber in compliance with the CPRI (Common Public Radio Interface) and an X2 interface).

The transmitting/receiving sections 103 may transmit the UL grant. The transmitting/receiving sections 103 may receive the UCI.

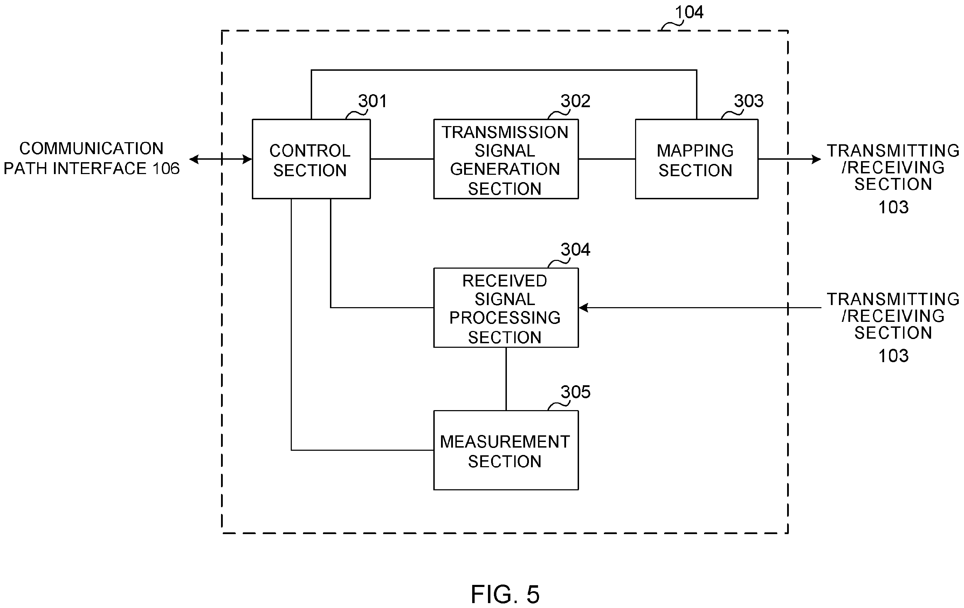

FIG. 5 is a diagram to show an example of a functional structure of the radio base station according to an embodiment. Note that, this example primarily shows functional blocks that pertain to characteristic parts of an embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can include a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource allocation) of system information, a downlink data signal (for example, a signal transmitted on the PDSCH), a downlink control signal (for example, a signal transmitted on the PDCCH and/or the EPDCCH, acknowledgment information, and so on). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, PSS/SSS), a downlink reference signal (for example, CRS, CSI-RS, DMRS), and so on.

The control section 301 may control applying a depuncture process and/or the rate-matching process to the received uplink shared channel (for example, the PUSCH) or the uplink data.

The transmission signal generation section 302 generates downlink signals (downlink control signals, downlink data signals, downlink reference signals and so on) based on indications from the control section 301 and outputs the downlink signals to the mapping section 303. The transmission signal generation section 302 can include a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on the indications from the control section 301. The DL assignment and the UL grant are both DCI, and follow the DCI format. For a downlink data signal, encoding processing, modulation processing, and the like are performed in accordance with a coding rate, modulation scheme, or the like determined based on channel state information (CSI) from each user terminal 20.

The mapping section 303 maps the downlink signals generated in the transmission signal generation section 302 to given radio resources, based on the indications from the control section 301, and outputs these to the transmitting/receiving sections 103. The mapping section 303 can include a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can include a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can include a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

### <User Terminal>

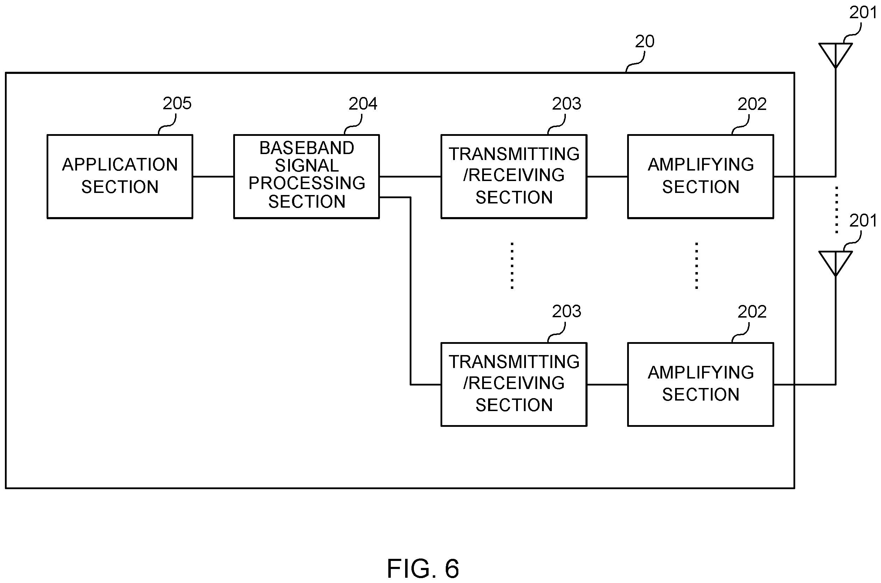

FIG. 6 is a diagram to show an example of an overall structure of the user terminal according to an embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can include transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may include a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 may receive the UL grant. The transmitting/receiving sections 203 may transmit the UCI.

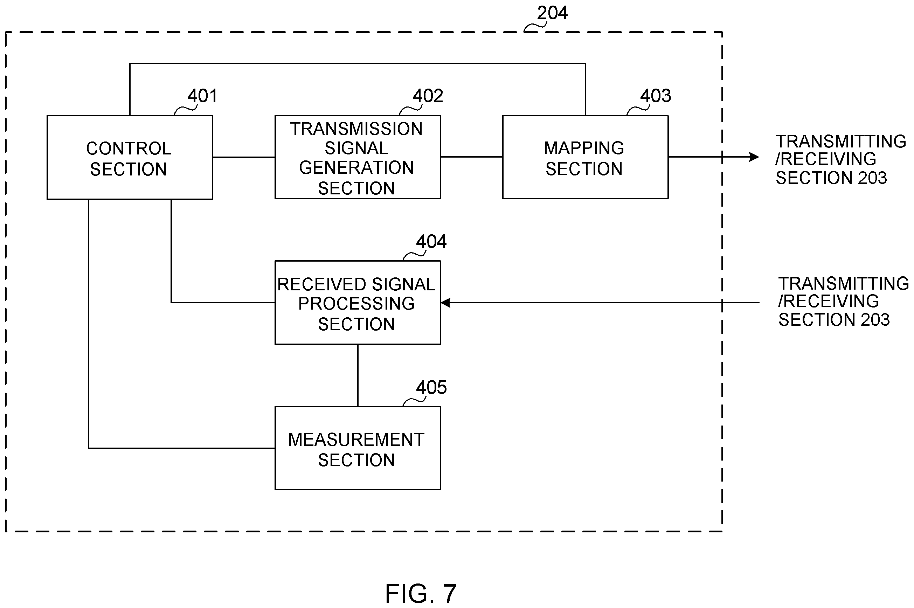

FIG. 7 is a diagram to show an example of a functional structure of the user terminal according to an embodiment. Note that, this example primarily shows functional blocks that pertain to characteristic parts of an embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can include a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The control section 401 may determine, in a case of transmitting data and an uplink control information (UCI, for example, HARQ-ACK) on the uplink shared channel (for example, PUSCH), a transmission process to be applied to the data, based on whether or not the transmission of the data is based on a transmission indication (UL grant) from the radio base station.

The control section 401, in a case that the UCI is of up to a given number of bits (for example, up to 2 bits), the puncture process may be applied to the above data.

The control section 401 may perform, in a case that the transmission of the data is not based on the transmission indication from the radio base station (for example, based on GF transmission), and the UCI is of more than a given number of bits (for example, more than 2 bits), control that does not transmit the UCI on the PUSCH based on the GF transmission.

The control section 401 may apply, in a case that the transmission of the data is not based on the transmission indication from the radio base station, and the number of blocks or block groups for the downlink data corresponding to the UCI (for example, PDSCH) exceeds a given threshold (for example, 2), bundling to the UCI for the total number of bits of the UCI to be a given number of bits (for example, 1 or 2 bits).

The control section 401, when acquiring various pieces of information reported from the radio base station 10, from the received signal processing section 404, may update parameters used for the control based on the acquired information.

The transmission signal generation section 402 generates uplink signals (uplink control signals, uplink data signals, uplink reference signals and so on) based on indications from the control section 401, and outputs the uplink signals to the mapping section 403. The transmission signal generation section 402 can include a signal generator, a signal generation circuit or signal generation apparatus that can be described based on general understanding of the technical field to which the present disclosure pertains.

For example, the transmission signal generation section 402 generates an uplink control signal about the acknowledgement information, the channel state information (CSI), and so on, based on the indications from the control section 401. The transmission signal generation section 402 generates uplink data signals, based on the indications from the control section 401. For example, when a UL grant is included in a downlink control signal that is reported from the radio base station 10, the control section 401 indicates that the transmission signal generation section 402 is to generate the uplink data signal.

The mapping section 403 maps the uplink signals generated in the transmission signal generation section 402 to radio resources, based on the indications from the control section 401, and outputs the result to the transmitting/receiving sections 203. The mapping section 403 can include a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can include a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can include a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

### <Hardware Structure>

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

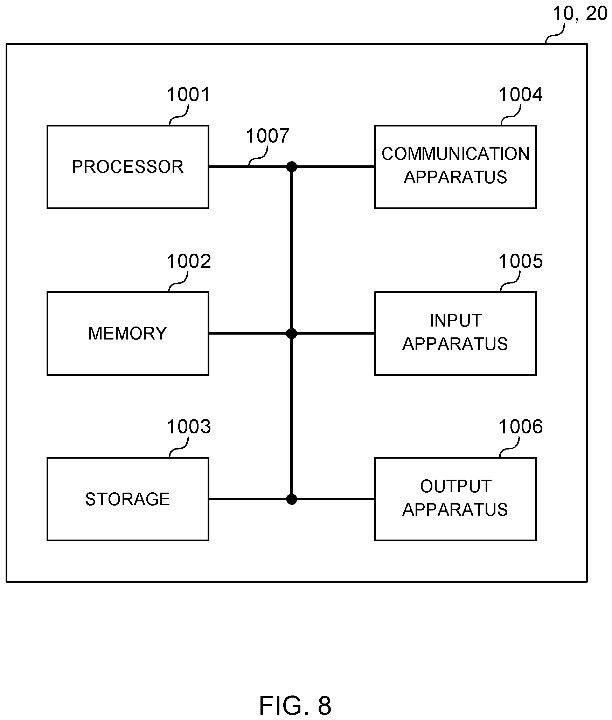

For example, a radio base station, a user terminal, and so on according to an embodiment of the present disclosure may function as a computer that executes the processes of the radio communication method of the present disclosure. FIG. 8 is a diagram to show an example of a hardware structure of the radio base station and the user terminal according to an embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and/or the like for implementing a radio communication method according to an embodiment.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described herein may be represented in absolute values or in relative values with respect to given values, or may be represented in another corresponding information. For example, radio resources may be specified by given indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described herein, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, instructions, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present disclosure may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments described in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods described in this specification with various components of steps in exemplary orders, the specific orders that are illustrated herein are by no means limiting.

The aspects/embodiments described herein may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the invention according to the present disclosure has been described in detail above, it should be obvious to a person skilled in the art that the invention according to the present disclosure is by no means limited to the embodiments described herein. The invention according to the present disclosure can be implemented with various corrections and in various modifications, without departing from the spirit and scope of the invention defined by the recitations of claims. Consequently, the description herein is provided only for the purpose of explaining examples, and should by no means be construed to limit the invention according to the present disclosure in any way.

### (Supplementary Note)

Hereinafter, supplementary notes of the present disclosure are added.
[Structure 1] A user terminal including
   a transmitting section that transmits data and uplink control information on an uplink shared channel, and
   a control section that determines a transmission process to be applied to the data, based on whether or not transmission of the data is based on a transmission indication from a radio base station.
[Structure 2] The user terminal according to Structure 1, wherein
   in a case that the uplink control information is of up to a given number of bits, the control section applies a puncture process to the data.
[Structure 3] The user terminal according to Structure 1 or Structure 2, wherein
   in a case that the transmission of the data is not based on the transmission indication from the radio base station, and the uplink control information is of more than the given number of bits, the control section does not transmit the uplink control information on the uplink control channel.
[Structure 4] The user terminal according to any one of Structures 1 to 3, wherein
   in a case that the transmission of the data is not based on the transmission indication from the radio base station, and the number of blocks for downlink data corresponding to the uplink control information exceeds a given threshold, the control section applies bundling to the uplink control information for a total number of bits of the uplink control information to be 1 or 2 bits.
[Structure 5] A radio communication method of a user terminal, the radio communication method including
   transmitting data and uplink control information on an uplink shared channel, and
   determining a transmission process to be applied to the data, based on whether or not transmission of the data is based on a transmission indication from a radio base station.

The present application is based on Japanese Patent Application No. 2017-239054 filed on November 27, 2017. The entire contents of the application are incorporated herein by reference.

## Claims

1. A user terminal comprising:
a transmitting section that transmits data and uplink control information on an uplink shared channel; and
a control section that determines a transmission process to be applied to the data, based on whether or not transmission of the data is based on a transmission indication from a radio base station.

2. The user terminal according to claim 1, wherein
in a case that the uplink control information is of up to a given number of bits, the control section applies a puncture process to the data.

3. The user terminal according to claim 1 or 2, wherein
in a case that the transmission of the data is not based on the transmission indication from the radio base station, and the uplink control information is of more than the given number of bits, the control section does not transmit the uplink control information on the uplink control channel.

4. The user terminal according to any one of claims 1 to 3, wherein
in a case that the transmission of the data is not based on the transmission indication from the radio base station, and the number of blocks for downlink data corresponding to the uplink control information exceeds a given threshold, the control section applies bundling to the uplink control information for a total number of bits of the uplink control information to be 1 or 2 bits.

5. A radio communication method of a user terminal, the radio communication method comprising:
transmitting data and uplink control information on an uplink shared channel; and
determining a transmission process to be applied to the data, based on whether or not transmission of the data is based on a transmission indication from a radio base station.
